# EUROPÄISCHE PATENTSCHRIFT

(11) **EP 1 366 309 B1**
(45) Veröffentlichungstag und Bekanntmachung des Hinweises auf die Patenterteilung: **13.10.2004**
(21) Anmeldenummer: 02748306.4
(22) Anmeldetag: 01.03.2002
(51) Int. Cl.: F16F 9/54, F16F 9/05, B60G 15/12

(54) **GASFEDER-DÄMPFEREIHEIT**
GAS SPRING DAMPER UNIT
ENSEMBLE AMORTISSEUR A RESSORT A PRESSION DE GAZ

(30) Priorität: 03.03.2001 DE 10110321
(43) Veröffentlichungstag der Anmeldung: 03.12.2003
(73) Patentinhaber: Continental AG, 30165 Hannover (DE)
(72) Erfinder: GOLD, Henning, 55452 Dorsheim (DE); BRAUN, Patrik, 55130 Mainz (DE); BEETZ, Stefan, 19089 Barnin (DE); KOBS, Peter, 18258 Schwaan (DE)
(74) Vertreter: Jaap, Reinhard
(86) Internationale Anmeldenummer: PCT/DE2002/000743
(87) Internationale Veröffentlichungsnummer: WO 2002/070918

(56) Entgegenhaltungen:
- WO-A-01/26921
- DE-A- 3 610 144
- DE-A- 19 932 717
- JP-A- 59 212 551

## Beschreibung

Die Erfindung bezieht sich auf eine Gasfeder-Dämpfereinheit nach dem Oberbegriff des Anspruchs 1.
Derartige Gasfeder-Dämpfereinheiten werden in der Fahrzeugindustrie insbesondere zur Aufhängung von Fahrzeugräder eingesetzt.

Feder-Dämpfereinheiten jeder Art haben die Aufgabe, Federkräfte aufzubauen, die den Belastungskräften des Fahrzeuges entgegenwirken und Dämpfungskräfte zu entwickeln, um die Bewegungsabläufe des Fahrzeugaufbaus stoß- und schwingungsarm zu halten. Dazu sind die Feder-Dämpfereinheiten jeweils mit einem unteren Stützlager an der Radaufhängung und mit einem oberen Stützlager am Fahrzeugaufbau eines Fahrzeuges angelenkt.
Es sind sogenannte Stoßdämpfer bekannt, die jeweils aus einer mechanischen Feder zur Aufbringung der Federkräfte und aus einer pneumatischen oder hydraulischen Dämpfereinheit zur Aufbringung der Dämpfungskräfte besteht. Dabei wird die Dämpfereinheit des Stoßdämpfers aus einem Zylinder, einem doppeltwirkenden Kolben und zwei gegenüberliegenden Druckräumen gebildet, die über eine in beiden Richtungen wirkende Drossel miteinander verbunden sind. Eine solcher Stoßdämpfer ist beispielsweise in der DE 37 16 819 A1 vorgestellt.
Bekannt sind aber auch Gasfeder-Dämpfereinheiten, die ihre Federkräfte und ihre Dämpfungskräfte ausschließlich aus den Drücken eines eingeschlossenen Gases entwickeln, so wie es zum Beispiel die EP 0 160 277 B1 beschreibt. Diese Gasfeder-Dämpfereinheit besteht im wesentlichen aus einem Zylindergehäuse und einem im Zylindergehäuse verschiebbaren Kolben mit einer Kolbenstange. Der Kolben und die Kolbenstange sind im Zylindergehäuse dichtend geführt und bilden so zwei gegenüberliegende und durch die Bewegung des Kolbens volumenveränderliche Druckkammern aus, die über eine im Kolben angesiedelte Drossel miteinander verbunden sind. Der aus dem Zylindergehäuse ragende Teil der Kolbenstange ist mit einem luftdichten Balg eingekleidet, der im Inneren einen weiteren volumenveränderlichen Druckraum bildet, der als Federraum fungiert und der zusätzlich mit dem entfernteren Druckraum im Zylindergehäuse verbunden ist und so einen kombinierten Feder-Dämpfungsraum ausbildet. Diese Gasfeder-Dämpfereinheit ist in einer anwendungsfallabhängigen Weise in einer solchen Einbaulage ausgerichtet, dass das obere Stützlager den Fahrzeugaufbau entweder mit dem Boden des Zylindergehäuses oder mit dem Kopf der Kolbenstange verbindet.

Dokument DE 19932717 offenbart eine Gasfer-Dämpfereinheit gemäß dem Oberbegriff des Anspruchs 1.

In allen der vorangehend aufgezeigten Fällen ist das obere Stützlager zwischen dem Fahrzeugaufbau und der Gasfeder-Dämpfereinheit mit einem besonderen Gummielement ausgestattet, das sich zwischen den miteinander korrespondierenden Metallteilen des Fahrzeugaufbaus und der Gasfeder-Dämpfereinheit einordnet.
Dieses Gummielement hat die Aufgabe, bei axial auf die Kolbenstange wirkenden Kräften weich anzusprechen, damit die Dämpferkräfte bei geringen Kolbenbewegungen möglichst klein bleiben. Dementsprechend ist das Gummielement in axialer und kardanischer Richtung mit einer geringen Federsteifigkeit ausgelegt. Das Gummielement hat aber weiterhin die Aufgabe, radiale und kardanische Kräfte aufzunehmen, um so in erster Linie den Kolben zu führen und von diesen Kräften zu entlasten und Klemmungen zu verhindern. Dementsprechend ist das Gummielement in radialer Richtung mit einer höheren Federsteifigkeit ausgelegt.
Nun ergibt sich aber insbesondere bei solchen Gasfeder-Dämpfereinheiten, die mit ihrem oberen Stützlager den Kopf der Kolbenstange der Gasfeder-Dämpfereinheit und den Fahrzeugaufbau verbinden, ein besonderer Nachteil, der darin besteht, dass das Gummielement durch den Gasdruck im Federraum einseitig belastet und auf Grund der sehr geringen Federsteifigkeit stark zusammengedrückt wird. Dadurch wird aber die federnde Funktion des Gummielementes in diese Richtung mehr oder weniger außer Kraft gesetzt und der Kolben wird aus seiner vorbestimmten Mittellage verschoben. Die Folge sind eine starke Geräuschentwicklung und ein verkürzter Federweg des Kolbens in der einen Richtung.

Der Erfindung liegt daher die Aufgabe zu Grunde, eine gattungsgemäße Gasfeder-Dämpfereinheit so weiterzuentwickeln, dass die Federsteifigkeit des oberen Stützlagers in beiden Federrichtungen auf einem geringen Niveau gleich groß ausgeführt ist.

Diese Aufgabe wird durch die kennzeichnenden Merkmale des Anspruches 1 gelöst. Weitere Ausgestaltungsmöglichkeiten ergeben sich aus den Unteransprüchen 2 bis 3. Die Erfindung beseitigt die genannten Nachteile des Standes der Technik.
Dabei liegt der besondere Vorteil der Erfindung darin, dass sowohl in der Einfederrichtung als auch in der Ausfederrichtung gleiche Federvorspannungen und damit gleiche Federsteifigkeiten vorhanden sind und somit auch in beiden Richtungen gleiche Federwege zur Verfügung stehen. Das verringert die Geräusche zwischen dem Fahrzeugaufbau und der Gasfeder-Dämpfereinheit, hält den Kolben der Gasfeder-Dämpfereinheit in der Mittellage und realisiert damit in beiden Richtungen gleiche Federwege.
Die Erfindung ist einfach und mit wenig fertigungstechnischen und fmanziellen Aufwendungen zu realisieren.
Die Erfindung ist auch sehr klein und damit platzsparend und lässt sich somit auch unter schwierigsten Einbaubedingungen anwenden.

Die Erfindung soll anhand eines Ausführungsbeispieles näher erläutert werden.
Dazu zeigen:
- Fig. 1:: eine Schnittdarstellung durch eine Gasfeder-Dämpfereinheit und
- Fig. 2:: eine Schnittdarstellung durch das obere Stützlager der Gasfeder-Dämpfereinheit.

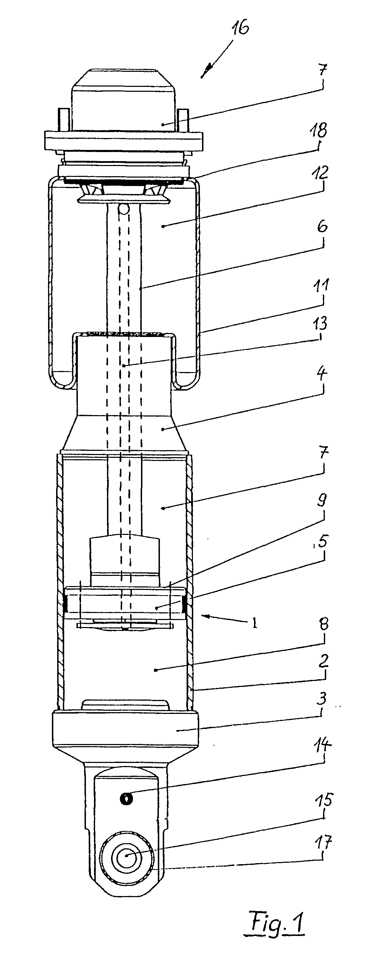

Die Gasfeder-Dämpfereinheit besteht nach der Fig. 1 aus einem zylindrischen Gehäuse 1 mit einer Gehäusewand 2, einem Gehäusefuß 3 und einem Gehäusedeckel 4. In herkömmlicher Art ist im Gehäuse 1 ein Kolben 5 mit einer Kolbenstange 6 dichtend eingepasst, sodass sich ein erster Dämpferraum 7 und ein zweiter Dämpferraum 8 ausbilden, die beide in beiden Richtungen durch eine Dämpfungsdrossel 9 miteinander verbunden sind. Die Kolbenstange 6 durchdringt den Gehäusedeckel 4 und besitzt an ihrem freien Ende einen Kolbenstangenkopf 10. Das aus dem Gehäuse 1 ragende Teil der Kolbenstange 6 ist von einem Balg 11 umgeben, der einerseits am zylindrischen Gehäuse 1 und andererseits am Kolbenstangenkopf 10 befestigt ist und der im Inneren einen Federraum 12 ausbildet. Dieser Federraum 12 ist über einen in der Kolbenstange 6 befindlichen axialen Kanal 13 mit dem entfernter liegenden zweiten Dämpfungsraum 8 verbunden, wodurch sich so ein kombinierter Feder-Dämpferraum ergibt. Ein Druckluftanschluss 14 im Gehäusefuß 3 ist mit einer äußeren Druckluftquelle verbunden, die im gesamten Druckluftsystem einen gewünschten Druck erzeugt und konstant hält.
Am Gehäusefuß 3 befindet sich ein unteres Stützlager 15 zum Anschluss an eine Radaufhängung des Fahrzeuges und am Kolbenstangenkopf 10 ist ein oberes Stützlager 16 zum Anschluss an den Aufbau des Fahrzeuges ausgebildet.
Beide Stützlager 15, 16 sind mit je einem Gummielement 17 und 18 ausgerüstet, die zwischen den Metallteilen zur Radaufhängung beziehungsweise zum Aufbau des Fahrzeuges angeordnet sind und so für eine Isolierung der Schallschwingungen sorgen.

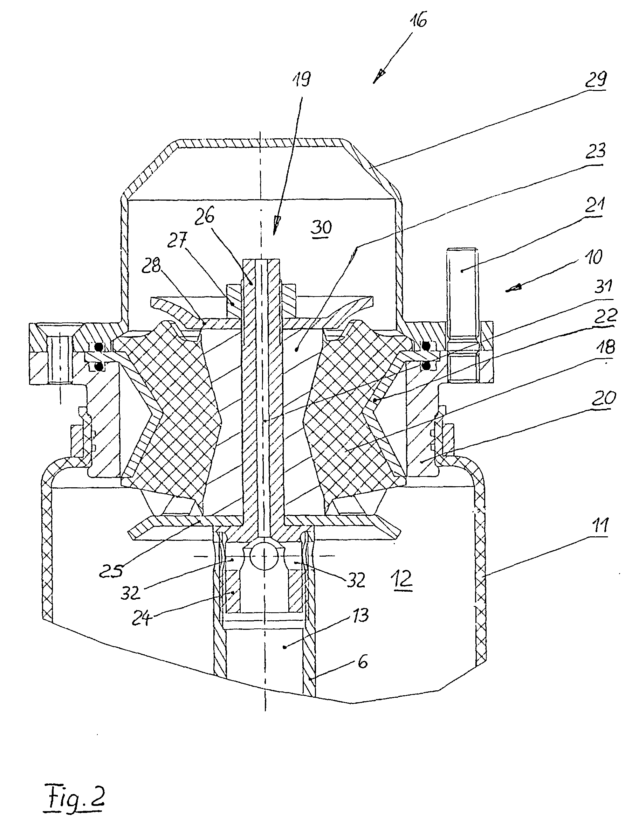

Dabei ist das obere Stützlager 16 mit seinem Gummielement 18 in besonderer Weise ausgebildet, wie es die Fig. 2 zeigt.
So besteht das obere Stützlager 16 aus einem inneren Stützelement 19, das mit der Kolbenstange 6 verbunden ist, aus einem äußeren Stützelement 20, das über Schrauben 21 am Aufbau des Fahrzeuges befestigt ist, und dem dazwischen angeordneten Gummielement 18. Dabei sind das innere Stützlager 19, das Gummielement 18 und das äußere Stützlager 20 in einer radialen Ebene zueinander ausgerichtet.

Das Gummielement 18 ist mit einem Metallmantel 22 und mit einem Metallkern 23 ausgerüstet, wobei der Metallmantel 22 fest im äußeren Stützelement 20 eingespannt ist und der Metallkern 23 starr mit dem inneren Stützelement 19 verbunden ist.
Zur Verbindung des Metallkerns 23 mit dem inneren Stützelement 19 besitzt der Metallkern 23 eine Aufnahmebohrung, die in ihren Abmessungen auf ein Zylinderteil des inneren Stützelementes 19 abgestimmt ist. Das innere Stützelement 19 besitzt weiterhin einerseits einen ersten Gewindezapfen 24, der ein Außengewinde für die Verschraubung mit der Kolbenstange 6 aufweist und der im Durchmesser größer ausgelegt ist und somit eine Anlageschulter für eine Tellerscheibe 25 ausbildet. Andererseits des inneren Stützelementes 19 und damit gegenüberliegend zum ersten Gewindezapfen 24 befindet sich ein zweiter Gewindezapfen 26 mit einer Befestigungsmutter 27 und einer zweiten, auf dem Zylinderteil des inneren Stützelementes 19 verschiebbaren Tellerscheibe 28. Auf dieses innere Stützelement 19 ist das Gummielement 18 mit seinem Metallkern 23 aufgeschoben und mit Hilfe der beiden Tellerscheiben 25, 28 und der Befestigungsmutter 27 fest eingespannt.
Erfindungsgemäß ist dieses obere Stützlager 16 auf der Seite des Fahrzeugaufbaus mit einem Gehäusedeckel 29 luftdicht abgedeckt, wodurch sich ein Druckausgleichsraum 30 bildet. Dieser Druckausgleichsraum 30 ist über einen axialen und durchgängigen Kanal 31 im inneren Stützelement 19, über die Bohrung 13 in der Kolbenstange 6 und über radiale Kanäle 32 im ersten Gewindezapfen 24 und in der Kolbenstange 6 sowohl mit dem Federraum 12 als auch mit dem zweiten Dämpferraum 8 verbunden. Damit wird in der Ruhestellung der Kolben 5 mit seiner Kolbenstange 6 im Bereich seines oberen Stützlagers 16 beidseitig mit dem gleichen Gasdruck belastet. Auf Grund gleich großer Flächenverhältnisse im Bereich des oberen Stützlagers 16 wirken daher keine unterschiedlichen Kräfte auf den Kolben 5, sodass der Kolben 5 in seiner konstruktionsbedingten Mittellage verbleibt.
Der axiale Kanal 31 und die radialen Kanäle 32 zur Verbindung vom Federraum 12 und vom Druckausgleichsraum 30 sind in ihrer Ausführung so bemessen, dass sich beim Durchströmen dieses Kanals 31 ein solcher Durchflusswiderstand einstellt, der bei geringen Kolbengeschwindigkeiten einen Druckausgleich ermöglicht und bei größeren Kolbengeschwindigkeiten einen solchen Druckausgleich behindert.

Gasfeder-Dämpfereinheiten haben die Aufgabe, die von der Fahrbahn ausgehenden Schwingbewegungen des Fahrzeugaufbaus gegenüber den Rädern abzufedern und dabei die Schwingbewegungen so abzudämpfen, dass die Abwärtsbewegung des Fahrzeugaufbaus als sanft empfunden wird und die Aufwärtsbewegung des Fahrzeugaufbaus die Räder in der Bodenhaftung belässt.
In der Ruhestellung herrscht ein ausgeglichener Druck im Druckausgleichsraum 30, im Federraum 12, im zweiten Dämpferraum 8 und im ersten Dämpferraum 7. Dadurch ist das Gummielement 18 nahezu entspannt und der Kolben 5 mit seiner Kolbenstange 6 befindet sich in einer vorbestimmten Mittellage.
Bei Einleitung einer vom Fahrzeugaufbau ausgehenden und abwärts wirkenden Kraft mit einer kleineren Geschwindigkeit überträgt sich diese gleichermaßen auf das äußere Stützelement 20 und auf das Gummielement 18. Dadurch wirkt zwischen dem äußeren Stützelement 20 und dem inneren Stützelement 19 ein Kräftemoment auf das Gummielement 18, das das Gummielement 18 zunächst innerhalb seines maximalen Federweges zusammendrückt, olme das dieses Kräftemoment auf die Kolbenstange 6 übertragen wird. Zwischen dem Federraum 12 und dem Druckausgleichsraum 30 ergibt sich durch den Volumenausgleich ein ausgeglichener Druck, der auch die auf das Gummielement 18 wirkenden Kräfte ausgleicht und das Gummielement 18 in seiner nahezu entspannten Mittellage behält. In dieser Phase wird die Dämpfungskraft allein durch die Federsteifigkeit des Gummielementes 18 aufgebracht.
Bei Einleitung einer Kraft mit einer größeren Geschwindigkeit kommt es zunächst zu einer Blockbildung des Gummielementes. Dadurch überträgt sich diese Kraft über das nun geblockte Gummielement 18 auf die Kolbenstange 6 und verschiebt den Kolben 5 in Richtung des Gehäusefußes 3. Dabei verkleinern sich der Federraum 12 und der zweite Dämpferraum 8, wodurch der Druck in diesen Räumen ansteigt und das Gas aus diesen Räumen verdrängt wird. So strömt Gas aus dem Federraum 12 über den axialen Kanal 13 in der Kolbenstange 6 in den zweiten Dämpfungsraum 8 und von dort über die Dämpfungsdrossel 9 in den ersten Dämpfungsraum 7. Der Durchflusswiderstand beim Durchströmen der Dämpfungsdrossel 9 bestimmt dabei die auf den Kolben 5 wirkende Dämpfungskraft.

Gleichzeitig findet über den axialen Kanal 31 im inneren Stützelement 19 wieder ein Volumenausgleich zwischen dem Federraum 12 und dem Druckausgleichsraum 30 statt. Auf Grund der höheren Kolbengeschwindigkeiten stellt sich beim Durchströmen des axialen Kanals 13 ein größerer Druckverlust ein, der im Druckausgleichsraum 30 einen gegenüber dem Federraum 12 geringeren Druck erzeugt. Damit wirkt eine aus dem Federraum 12 wirkende Druckdifferenz auf das Gummielement 18 und spannt das Gummielement 18 entsprechend vor und erhöht die Federsteifigkeit des Gummielementes 18. Dadurch wirken in dieser Phase allein die Strömungswiderstände über der Dämpfnngsdrossel 9 als Dämpfungskräfte.

Bei Einleitung einer vom Fahrzeugaufbau ausgehenden und aufwärts wirkenden Kraft stellen sich in analoger Weise umgekehrte Bewegungsabläufe ein.

### Liste der Bezugszeichen

- 1: Gehäuse
- 2: Gehäusewand
- 3: Gehäusefuß
- 4: Gehäusedeckel
- 5: Kolben
- 6: Kolbenstange
- 7: Erster Dämpferraum
- 8: Zweiter Dämpferraum
- 9: Dämpfungsdrossel
- 10: Kolbenstangenkopf
- 11: Balg
- 12: Federraum
- 13: Axialer Kanal
- 14: Druckluftanschluss
- 15: Unteres Stützlager
- 16: Oberes Stützlager
- 17: Unteres Gummielement
- 18: Oberes Gummielement
- 19: Inneres Stützelement
- 20: Äußeres Stützelement
- 21: Schraube
- 22: Metallmantel
- 23: Metallkern
- 24: Erster Gewindezapfen
- 25: Erste Tellerscheibe
- 26: Zweiter Gewindezapfen
- 27: Befestigungsmutter
- 28: Zweite Tellerscheibe
- 29: Gehäusedeckel
- 30: Druckausgleichsraum
- 31: Axialer Kanal
- 32: Radialer Kanal

## Patentansprüche

1. Gasfeder-Dämpfereitdieit, bestehend aus
- einem zylindrischen Gehäuse (1) mit einem Kolben (5) und einer Kolbenstange (6), die zusammen einen beim Einfedern größer werdenden ersten Dämpfungsraum (7) und einen beim Einfedern kleiner werdenden zweiten Dämpfungsraum (8) ausbilden und
- einem Balg (11), der an der Kolbenstange (6) und am Gehäuse (1) befestigt ist und der so einen beim Einfedern kleiner werdenden Federraum (12) ausbildet, wobei
- die beiden Dämpfungsräume (7, 8) über eine Dämpfungsdrossel (9) und der Dämpfungsraum (8) und der Federraum (12) über einen axialen Kanal (13) miteinander verbunden sind und
- das zylindrische Gehäuse (1) über ein unteres Stützlager (15) mit einer Radaufhängung des Fahrzeuges und die Kolbenstange (6) über ein oberes Stützlager (16) mit dem Aufbau des Fahrzeuges verbunden sind,
**dadurch gekennzeichnet, dass**
- das obere Stützlager (16) aus einem Gummielement (18) besteht, das in einer radialen Ebene mit einem inneren Stützelement (19) und einem äußeren Stützelement ((20) angeordnet ist und das mit dem inneren Stützelement (19) an der Kolbenstange (6) und mit dem äußeren Stützelement (20) am Aufbau des Fahrzeuges befestigt ist,
- das obere Stützlager (16) auf der vom Federraum (12) abgewandten Seite des Gummielementes (18) einen zusätzlichen Druckausgleichsraum (30) besitzt, der über einen Druckausgleichskanal mit dem Federraum (12) verbunden ist und
- der Druckausgleichskanal einen Durchflusswiderstand besitzt, der nur bei geringen Dämpfergeschwindigkeiten einen Druckausgleich ermöglicht.

2. Gasfeder-Dämpfereinheit nach Anspruch 1,
**dadurch gekennzeichnet, dass** der Druckausgleichskanal aus einem axialen Kanal (31) und radialen Kanälen (32 im inneren Stützelement (19) gebildet wird.

3. Gasfeder-Dämpfereinheit nach Anspruch 2,,
**dadurch gekennzeichnet, dass** das innere Stützelement (19) mit der Kolbenstange (6) verbunden ist und die radialen Kanäle (32) des Druckausgleichskanals in diesem Gewindezapfen (24) und in der Kolbenstange (6) eingearbeitet sind.

## Claims

1. Pneumatic-spring damper unit consisting of:
- a cylindrical housing (1) with a piston (5) and a piston rod (6), which together form a first damping compartment (7) that becomes larger when jouncing occurs and a second damping compartment (8) that becomes smaller when jouncing occurs, and
- a bellows (11) which is fastened to the piston rod (6) and to the housing (1) and which thus forms a spring compartment (12) that becomes smaller when jouncing occurs, wherein
- the two damping compartments (7, 8) are connected to one another via a damping throttle (9), and the damping compartment (8) and spring compartment (12) are connected to one another via an axial duct (13), and
- the cylindrical housing (1) is connected to a wheel suspension of the vehicle via a lower supporting bearing (15), and the piston rod (6) is connected to the superstructure of the vehicle via an upper supporting bearing (16),
**characterised in that**
- the upper supporting bearing (16) consists of a rubber element (18) which is disposed in one radial plane with an inner supporting element (19) and an outer supporting element (20) and which is fastened to the piston rod (6) by means of the inner supporting element (19) and to the superstructure of the vehicle by means of the outer supporting element (20),
- the upper supporting bearing (16) possesses, on that side of the rubber element (18) which faces away from the spring compartment (12), an additional pressure-equalising compartment (30) which is connected to the spring compartment (12) via a pressure-equalising duct, and
- the pressure-equalising duct possesses a through-flow resistance which permits pressure-equalisation only at low damper speeds.

2. Pneumatic-spring damper unit according to claim 1,
**characterised in that** the pressure-equalising duct is formed from an axial duct (31) and radial ducts (32) in the inner supporting element (19).

3. Pneumatic-spring damper unit according to claim 2,
**characterised in that** the inner supporting element (19) is connected to the piston rod (6) and the radial ducts (32) of the pressure-equalising duct are incorporated into this threaded pin (24) and into the piston rod (6).

## Revendications

1. Unité d'amortissement à ressort à gaz comprimé, composée :
- d'un boîtier cylindrique (1), comprenant un piston (5) et une tige de piston (6) qui forment ensemble une première chambre d'amortissement (7) s'agrandissant lors de la compression du ressort et une seconde chambre d'amortissement (8) rapetissant lors de la compression du ressort,
- d'un soufflet (11) fixé sur la tige de piston (6) et sur le boîtier (1) qui forme ainsi une chambre de ressort (12) rapetissant lors de la compression du ressort, et
- les deux chambres d'amortissement (7, 8) sont reliées entre elles par un restricteur d'amortissement (9), alors que la chambre d'amortissement (8) et la chambre de ressort (12) sont reliées entre elles par un conduit axial (13), et
- le boîtier cylindrique (1) est relié à une suspension de roue du véhicule par un palier de support inférieur (15), alors que la tige de piston (6) est reliée à la carrosserie du véhicule par un palier de support supérieur (16),
**caractérisée en ce que**
- le palier de support supérieur (16) est constitué d'un élément en caoutchouc (18) disposé dans un plan radial avec un élément de support interne (19) et un élément de support externe (20), et fixé sur la tige de piston (6) à l'aide de l'élément de support interne (19) et sur la carrosserie du véhicule à l'aide de l'élément de support externe (20),
- le palier de support supérieur (16) possède, sur le côté de l'élément de caoutchouc (18) qui tourne le dos à la chambre de ressort, une chambre additionnelle de compensation de pression (30) reliée à la chambre de ressort (12) par un conduit de compensation de pression, et
- le conduit de compensation de pression possède une résistance à l'écoulement qui ne permet de réaliser une compensation de pression que pour de faibles vitesses d'amortissement.

2. Unité d'amortissement à ressort à gaz selon la revendication 1,
**caractérisée en ce que**
le conduit de compensation de pression se compose d'un conduit axial (31) et de conduits radiaux (32) à l'intérieur de l'élément de support interne (19).

3. Unité d'amortissement à ressort à gaz selon la revendication 2,
**caractérisée en ce que**
l'élément de support interne (19) est relié à la tige de piston (6), et les conduits radiaux (32) du conduit de compensation de pression sont incorporés dans la goupille filetée (24) et dans la tige de piston (6).
